# EUROPEAN PATENT SPECIFICATION

(11) **EP 3 501 905 B1**
(45) Date of publication and mention of the grant of the patent: **16.06.2021**
(21) Application number: 17210551.2
(22) Date of filing: 22.12.2017
(51) Int. Cl.: B60R 9/06, B60R 9/10

(54) **CARRIER**
TRÄGER
SUPPORT

(43) Date of publication of application: 26.06.2019
(73) Proprietor: King Roof Industrial Co., Ltd., Taichung City (TW)
(72) Inventor: SHEN, SHIH-CHIEH, Waipu Dist., Taichung City (TW); HSIEH, Chun-Yi, Waipu Dist., Taichung City (TW)
(74) Representative: Lang, Christian

(56) References cited:
- DE-U1-202016 104 315
- US-A1- 2008 099 522
- US-A1- 2011 057 008

## Description

### BACKGROUND OF THE INVENTION

### Field of the Invention

The present invention relates to a carrier.

### Description of the Prior Art

Conventionally, a bicycle is positioned on a vehicle by a carrier for carrying the bicycle to the destination. A typical carrier has a main rod and a connecting rod pivotally connected to the main rod. The other end of the main rod has a supporting rod for supporting the bicycle. The connecting rod, the supporting rod, and the main rod are pivotally connected by a manner of tight-fit. For example, a rubber washer is set at the pivot portion to increase friction. They are pivoted by exerting force directly for folding.

However, after using for a long time, the connecting rod and the main rod may be loosened to pivot freely. Thus, damages of vehicle or the carrier may result. On the other hand, when the vehicle travels, the connecting rod and the main rod may be shaken and loosened so that the bicycle may fall.

The US patent application US 2011/057008 A1 discloses a bicycle carrier having a positioning mechanism to prohibit the pivoting of the main rod. The positioning mechanism includes a pin slidably disposed in a sliding groove and a release lever. The sliding groove and the release lever are located at the main rod and the pin is connected to a pivot axle. When the pin is moved to the bottom of the sliding groove, the release lever can pivot to cover the upper portion of the sliding groove to prohibit the pin from moving upward. Thereby, the main rod is prohibited from pivoting with respect to a base portion. To make the main rod pivotable again, the release lever has to be pivoted away from the sliding groove first. However, when using this design, the user has to swing the main rod with one hand and to pivot the release lever with the other hand in order to lock or release the main rod.

Therefore, such conventional carrier cannot be operated by one hand.

### SUMMARY OF THE INVENTION

The main object of the present invention is to provide a carrier having a positioning assembly to quickly fold the carrier.

To achieve the above and other objects, a carrier characterized by the features defined in claim 1 is provided, the carrier of the present invention including a main body, a sliding groove, and a positioning assembly.

The main body includes a main rod and a connecting rod. The main rod has at least one supporting rod for supporting a bicycle at an end thereof The connecting rod and the main rod are pivotally connected by a pivot axle. The connecting rod is adapted for connecting with a vehicle. The sliding groove is formed on one of the main rod and the connecting rod. The pivot axle is received in the sliding groove so that the main rod and the connecting rod are relatively slidable between a first position and a second position. The positioning assembly includes a positioning portion, a positioning element, and an elastic element. The positioning portion is arranged on one of the main rod and the connecting rod. The positioning element is arranged on the other one of the main rod and the connecting rod. The elastic element is arranged between the main rod and the connecting rod so that the main rod and the connecting rod tend to retain at the first position. When the main rod and the connecting rod are at the first position, the positioning element and the positioning portion are positioned to each other so that the main rod and the connecting rod are unable to pivot with respect to each other. When the main rod and the connecting rod are at the second position, the positioning element is not positioned to the positioning portion so that the connecting rod and the main rod are pivotable with respect to each other.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Figs. 1 and 2 are stereograms of the present invention;
Fig. 3 is a breakdown drawing of the present invention;
Figs. 4 to 6 are illustrations of the present invention when operating.

### DETAILED DESCRIPTION OF THE PREFERRED EMBODIMENTS

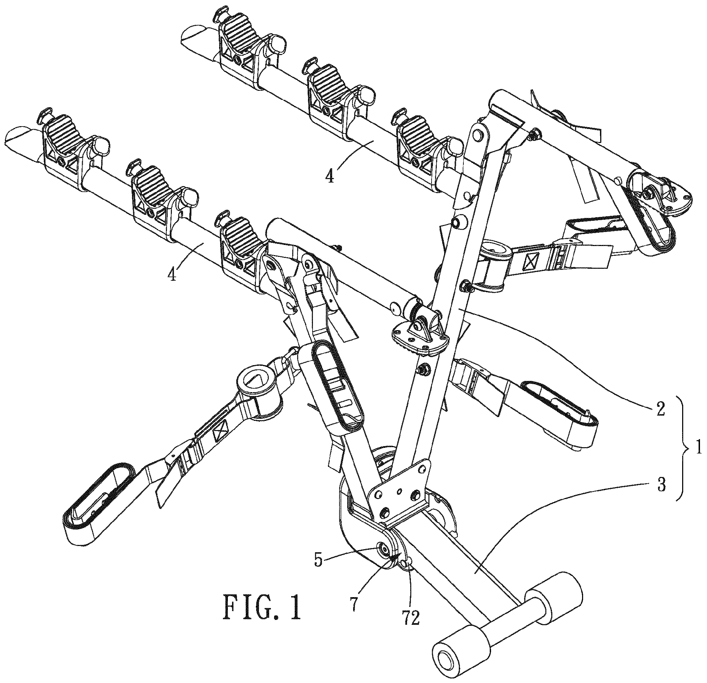

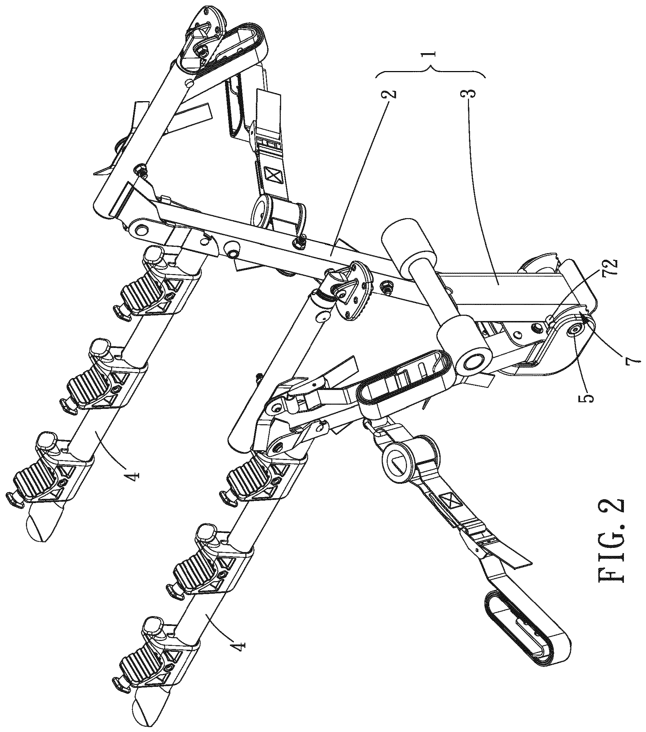

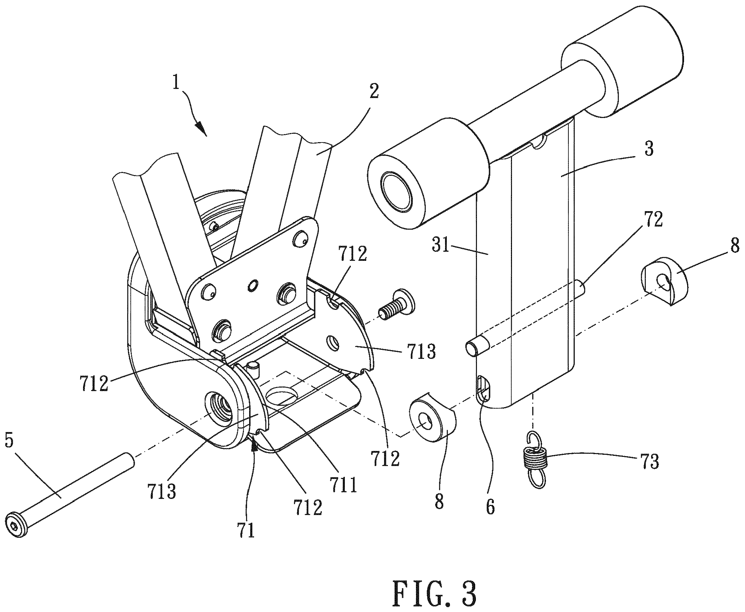

Please refer to Fig. 1 to Fig. 6, the carrier of the present invention includes a main body 1, a sliding groove 6, and a positioning assembly 7.

The main body 1 includes a main rod 2 and a connecting rod 3. The main rod 2 has at least one supporting rod 4 for supporting a bicycle at an end thereof The connecting rod 3 and the main rod 2 are pivotally connected by a pivot axle 5. The connecting rod 3 is adapted for connecting with a vehicle. In the present embodiment, the main rod 2 is a V-shaped rod, and each of two ends of the main rod 2 is disposed with one said supporting rod 4.

The sliding groove 6 is formed on one of the main rod 2 and the connecting rod 3. The pivot axle 5 is received in the sliding groove 6 so that the main rod 2 and the connecting rod 3 are relatively slidable between a first position and a second position.

The positioning assembly 7 includes a positioning portion 71, a positioning element 72, and an elastic element 73. The positioning portion 71 is arranged on one of the main rod 2 and the connecting rod 3. The positioning element 72 is arranged on the other one of the main rod 2 and the connecting rod 3. The elastic element 73 is arranged between the main rod 2 and the connecting rod 3 so that the main rod 2 and the connecting rod 3 tend to retain at the first position.

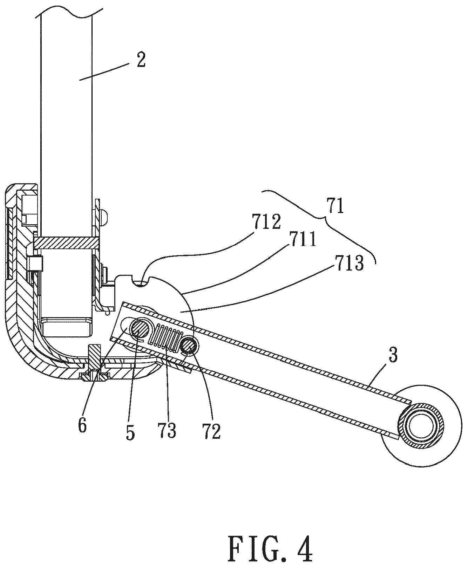

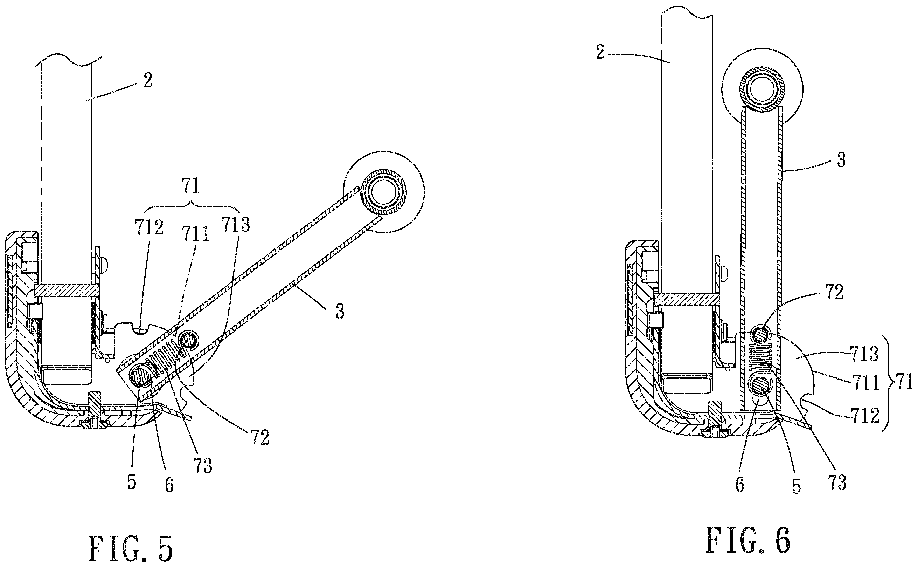

When the main rod 2 and the connecting rod 3 are at the first position (as shown in Fig. 4 and Fig. 6), the positioning element 72 and the positioning portion 71 are positioned to each other so that the main rod 2 and the connecting rod 3 are unable to pivot with respect to each other. When the main rod 2 and the connecting rod 3 are at the second position (as shown in Fig. 5), the positioning element 72 is not positioned to the positioning portion 71 so that the connecting rod 3 and the main rod 2 are pivotable with respect to each other. Thus, the main rod 2 and the connecting rod 3 can pivot to quickly fold or open by moving the main rod 2 and the connecting rod 3 to the second position.

More specifically, the positioning portion 71 includes an arch-shaped section 711 and two recesses 712 formed on the arch-shaped section 711. When the main rod 2 and the connecting rod 3 are at the first position, the positioning element 72 is received in one of the recesses 712 to prohibit the main rod 2 and the connecting rod 3 from pivoting relatively. When the main rod 2 and the connecting rod 3 are at the second position and the positioning element 72 leaves the recess 712, the positioning element 72 abuts against the arch-shaped section 711 so that the main rod 2 and the connecting rod 3 are pivotable with respect to each other. When the positioning element 72 slides to a position corresponding to the recess 712, the main rod 2 and the connecting rod 3 slide to the first position due to the elastic element 73, and the positioning element 72 is received in the recess 712. Thus, the main rod 2 and the connecting rod 3 are prevented from pivoting freely.

In the present embodiment, the positioning element 72 is a pin, and the pin is inserted into the connecting rod 3. The sliding groove 6 is formed on the connecting rod 3. The positioning element 72 is arranged on the connecting rod 3. The positioning portion 71 is arranged on the main rod 2. In other possible embodiments, the pin, the sliding groove 6, and the positioning element 72 can be arranged reversely. The elastic element 73 is arranged between the positioning element 72 and the pivot axle 5. The elastic element 73 is an extension spring. Thus, the elastic element 73 can pull the main rod 2 and the connecting rod 3 toward each other to the first position for positioning. When a force is exerted to make the main rod 2 and the connecting rod 3 move away from each other to the second position, the main rod 2 and the connecting rod 3 can pivot relatively.

Preferably, the positioning portion 71 includes two lateral plates 713. The pivot axle 5 is inserted through the two lateral plates 713. One end of the connecting rod 3 is received between the two lateral plates 713 for enhancing the structure strength. Furthermore, each of two sides of the connecting rod 3 along a longitudinal direction of the pivot axle 5 is an arch-shaped face 31. The carrier further has two abutting elements 8. The pivot axle 5 is inserted through the two abutting elements 8. Each of the abutting elements 8 abuts against the connecting rod 3 and one of the lateral plates 713. An end of each of the abutting elements 8 abutting against the connecting rod 3 has a shape corresponding to the arch-shaped face 31. An end of each of the abutting elements 8 abutting against the lateral plate 713 has a flat surface. Thereby, the connecting rod 3 and the main rod 2 can pivot steadily and may not shake.

In conclusion, the main rod and the connecting rod can pivot or be positioned easily to quickly fold or open the carrier. Besides, the positioning element is prohibited from leaving the recess freely due to the elastic element so that the main rod and the connecting rod are prevented from pivoting freely.

## Claims

1. A carrier, including:
a main body (1), including a main rod (2) and a connecting rod (3), the main rod (2) having at least one supporting rod (4) for supporting a bicycle at an end thereof, the connecting rod (3) and the main rod (2) being pivotally connected by a pivot axle (5), the connecting rod (3) being adapted for connecting with a vehicle;
a sliding groove (6), formed on one of the main rod (2) and the connecting rod (3), the pivot axle (5) being received in the sliding groove (6) so that the main rod (2) and the connecting rod (3) are relatively slidable between a first position and a second position;
a positioning assembly (7), including a positioning portion (71), a positioning element (72) and an elastic element (73), the positioning portion (71) being arranged on one of the main rod (2) and the connecting rod (3), the positioning element (72) being arranged on the other one of the main rod and (2) the connecting rod (3), the elastic element (73) being arranged between the main rod (2) and the connecting rod (3) so that the main rod (2) and the connecting rod (3) tend to retain at the first position;
**characterized in that**
the positioning portion (71) includes an arch-shaped section (711) and two recesses (712) formed on the two opposite ends of the arch-shaped section (711), wherein, when the main rod (2) and the connecting rod (3) are at a first position, the positioning element (72) is received in one of the recesses (712) of the positioning portion (71) and the main rod (2) and the connecting rod (3) are not pivotable with respect to each other due to an elastic force of the elastic element;
wherein, when the main rod (2) and the connecting rod (3) are at a second position, the positioning element (72) is not received in one of the recesses (712) of the positioning portion (71) and abuts against the arch-shaped section (711) and the main rod (2) and the connecting rod (3) are pivotable with respect to each other.

2. The carrier of claim 1, wherein the positioning element (72) is a pin, the pin is inserted into the connecting rod (3).

3. The carrier of claim 1, wherein the sliding groove (6) is formed on the connecting rod (3), the positioning element (72) is arranged on the connecting rod (3).

4. The carrier of claim 1, wherein the elastic element (73) is arranged between the positioning element (72) and the pivot axle (5), the elastic element (73) is an extension spring.

5. The carrier of claim 1, wherein the positioning portion (71) is arranged on the main rod (2), the positioning portion (71) includes two lateral plates (713), the pivot axle (5) is inserted through the two lateral plates (713), one end of the connecting rod (3) is received between the two lateral plates (713).

6. The carrier of claim 5, wherein each of two sides of the connecting rod (3) along a longitudinal direction of the pivot axle (5) is an arch-shaped face (31), the carrier further has two abutting elements (8), the pivot axle (5) is inserted through the two abutting elements (8), each of the abutting elements (8) abuts against the connecting rod (3) and one of the lateral plates (713), an end of each of the abutting elements (8) abutting against the connecting rod (3) has a shape corresponding to the arch-shaped face (31), an end of each of the abutting elements (8) abutting against the lateral plate (713) has a flat surface.

7. The carrier of claim 1, wherein the main rod (2) is a V-shaped rod, each of two ends of the main rod (2) is disposed with one said supporting rod (4).

8. The carrier of claim 2, wherein the sliding groove (6) is formed on the connecting rod (3), the positioning element (72) is arranged on the connecting rod (3); the elastic element (73) is arranged between the positioning element (72) and the pivot axle (5), the elastic element (73) is an extension spring; the positioning portion (71) is arranged on the main rod (2), the positioning portion (71) includes two lateral plates (713), the pivot axle (5) is inserted through the two lateral plates (713), one end of the connecting rod (3) is received between the two lateral plates (713); each of two sides of the connecting rod (3) along a longitudinal direction of the pivot axle (5) is an arch-shaped face (31), the carrier further has two abutting elements (8), the pivot axle (5) is inserted through the two abutting elements (8), each of the abutting elements (8) abuts against the connecting rod (3) and one of the lateral plates (713), an end of each of the abutting elements (8) abutting against the connecting rod (3) has a shape corresponding to the arch-shaped face (31), an end of each of the abutting elements (8) abutting against the lateral plate (713) has a flat surface; the main rod (2) is a V-shaped rod, each of two ends of the main rod (2) is disposed with one said supporting rod (4).

## Patentansprüche

1. Träger, umfassend:
einen Hauptkörper (1), welcher eine Hauptstange (2) und eine Verbindungsstange (3) enthält, wobei die Hauptstange (2) mindestens eine Stützstange (4) zum Stützen eines Fahrrads an einem Ende davon aufweist, wobei die Verbindungsstange (3) und die Hauptstange (2) durch eine Schwenkachse (5) schwenkbar verbunden sind, wobei die Verbindungsstange (3) zum Verbinden mit einem Fahrzeug angepasst ist,
eine Gleitnut (6), welche entweder an der Hauptstange (2) oder an der Verbindungsstange (3) ausgebildet ist, wobei die Schwenkachse (5) in der Gleitnut (6) aufgenommen ist, so dass die Hauptstange (2) und die Verbindungsstange (3) zwischen einer ersten Position und einer zweiten Position relativ verschiebbar sind,
eine Positionierungsanordnung (7), welche einen Positionierungsabschnitt (71), ein Positionierungselement (72) und ein elastisches Element (73) enthält, wobei der Positionierungsabschnitt (71) an der Hauptstange (2) oder der Verbindungsstange (3) angeordnet ist, wobei das Positionierungselement (72) an der jeweils anderen, der Hauptstange (2) oder der Verbindungsstange (3), angeordnet ist, wobei das elastische Element (73) zwischen der Hauptstange (2) und der Verbindungsstange (3) angeordnet ist, so dass die Hauptstange (2) und die Verbindungsstange (3) dazu neigen, in der ersten Position zu bleiben,
**dadurch gekennzeichnet, dass**
der Positionierungsabschnitt (71) einen bogenförmigen Abschnitt (711) und zwei Ausnehmungen (712) aufweist, welche an den beiden gegenüberliegenden Enden des bogenförmigen Abschnitts (711) ausgebildet sind, wobei, wenn sich die Hauptstange (2) und die Verbindungsstange (3) in einer ersten Position befinden, das Positionierungselement (72) in einer der Ausnehmungen (712) des Positionierungsabschnitts (71) aufgenommen ist und die Hauptstange (2) und die Verbindungsstange (3) aufgrund einer elastischen Kraft des elastischen Elements nicht in Bezug aufeinander schwenkbar sind,
wobei, wenn sich die Hauptstange (2) und die Verbindungsstange (3) in einer zweiten Position befinden, das Positionierungselement (72) nicht in einer der Ausnehmungen (712) des Positionierungsabschnitts (71) aufgenommen ist und an dem bogenförmigen Abschnitt (711) anliegt, wobei die Hauptstange (2) und die Verbindungsstange (3) in Bezug zueinander schwenkbar sind.

2. Träger nach Anspruch 1, bei welchem das Positionierelement (72) ein Stift ist, welcher in die Verbindungsstange (3) eingesetzt ist.

3. Träger nach Anspruch 1, bei welchem die Gleitrille (6) an der Verbindungsstange (3) ausgebildet ist, wobei das Positionierelement (72) an der Verbindungsstange (3) angeordnet ist.

4. Träger nach Anspruch 1, bei welchem das elastische Element (73) zwischen dem Positionierelement (72) und der Schwenkachse (5) angeordnet ist, wobei das elastische Element (73) eine Zugfeder ist.

5. Träger nach Anspruch 1, bei welchem der Positionierabschnitt (71) an der Hauptstange (2) angeordnet ist, wobei der Positionierabschnitt (71) zwei seitliche Platten (713) aufweist, wobei die Schwenkachse (5) durch die beiden seitlichen Platten (713) gesteckt ist und ein Ende der Verbindungsstange (3) zwischen den beiden seitlichen Platten (713) aufgenommen ist.

6. Träger nach Anspruch 5, bei welchem jede der zwei Seiten der Verbindungsstange (3), entlang einer Längsrichtung der Schwenkachse (5), eine bogenförmige Fläche (31) ist, wobei der Träger weiterhin zwei Anschlagelemente (8) aufweist, wobei die Schwenkachse (5) durch die beiden Anschlagelemente (8) hindurchgesteckt ist, wobei jedes der Anschlagelemente (8) an der Verbindungsstange (3) und einer der Seitenplatten (713) anliegt, wobei ein Ende jedes der Anschlagelemente (8), welches an der Verbindungsstange (3) anliegt, eine der bogenförmigen Fläche (31) entsprechende Form aufweist, wobei ein Ende jedes der Anschlagelemente (8), welche an der Seitenplatte (713) anliegen, eine ebene Fläche aufweist.

7. Träger nach Anspruch 1, bei welchem die Hauptstange (2) eine V-förmige Stange ist, wobei jedes der beiden Enden der Hauptstange (2) mit einer der Stützstangen (4) angeordnet ist.

8. Träger nach Anspruch 2, bei welchem die Gleitnut (6) an der Verbindungsstange (3) ausgebildet ist, wobei das Positionierelement (72) an der Verbindungsstange (3) angeordnet ist, wobei das elastische Element (73) zwischen dem Positionierelement (72) und der Schwenkachse (5) angeordnet ist, wobei das elastische Element (73) eine Zugfeder ist, wobei der Positionierabschnitt (71) an der Hauptstange (2) angeordnet ist und der Positionierabschnitt (71) zwei seitliche Platten (713) aufweist, wobei die Schwenkachse (5) durch die beiden seitlichen Platten (713) hindurchgeführt ist, wobei ein Ende der Verbindungsstange (3) zwischen den beiden seitlichen Platten (713) aufgenommen ist, wobei jede von zwei Seiten der Verbindungsstange (3) entlang einer Längsrichtung der Schwenkachse (5) eine bogenförmige Fläche (31) ist, wobei der Träger weiterhin zwei Anschlagelemente (8) aufweist, wobei die Schwenkachse (5) durch die beiden Anschlagelemente (8) hindurch eingesetzt ist und jedes der Anschlagelemente (8) an der Verbindungsstange (3) und einer der Seitenplatten (713) anliegt, wobei ein Ende jedes der Anschlagelemente (8), welches an der Verbindungsstange (3) anliegt, eine Form hat, welche der bogenförmigen Fläche (31) entspricht, wobei ein Ende jedes der Anschlagelemente (8), welches an der Seitenplatte (713) anliegt, eine ebene Fläche hat, wobei die Hauptstange (2) eine V-förmige Stange ist und jedes der beiden Enden der Hauptstange (2) mit einer der genannten Stützstangen (4) angeordnet ist.

## Revendications

1. Support, incluant:
un corps principal (1), incluant une tige principale (2) et une tige de liaison (3), la tige principale (2) présentant au moins une tige de soutien (4) permettant de soutenir une bicyclette à une extrémité de celle-ci, la tige de liaison (3) et la tige principale (2) étant reliées de manière pivotante par un axe de pivot (5), la tige de liaison (3) étant adaptée pour une liaison avec un véhicule;
une rainure de coulissement (6), formée sur une de la tige principale (2) et de la tige de liaison (3), l'axe de pivot (5) étant reçu dans la rainure de coulissement (6) de façon à ce que la tige principale (2) et la tige de liaison (3) puissent coulisser relativement entre une première position et une seconde position;
un ensemble de positionnement (7), incluant une portion de positionnement (71), un élément de positionnement (72) et un élément élastique (73), la portion de positionnement (71) étant agencée sur une de la tige principale (2) et de la tige de liaison (3), l'élément de positionnement (72) étant agencé sur l'autre de la tige principale et (2) de la tige de liaison (3), l'élément élastique (73) étant agencé entre la tige principale (2) et la tige de liaison (3) de façon à ce que la tige principale (2) et la tige de liaison (3) aient tendance à être retenues au niveau de la première position;
**caractérisé en ce que**
la portion de positionnement (71) inclut une section en forme d'arc (711) et deux évidements (712) formés sur les deux extrémités opposées de la section en forme d'arc (711), dans lequel, lorsque la tige principale (2) et la tige de liaison (3) sont au niveau d'une première position, l'élément de positionnement (72) est reçu dans un des évidements (712) de la portion de positionnement (71) et la tige principale (2) et la tige de liaison (3) ne peuvent pas pivoter l'une par rapport à l'autre en raison d'une force élastique de l'élément élastique;
dans lequel, lorsque la tige principale (2) et la tige de liaison (3) sont au niveau d'une seconde position, l'élément de positionnement (72) n'est pas reçu dans un des évidements (712) de la portion de positionnement (71) et vient buter contre la section en forme d'arc (711) et la tige principale (2) et la tige de liaison (3) peuvent pivoter l'une par rapport à l'autre.

2. Support selon la revendication 1, dans lequel l'élément de positionnement (72) est une goupille, la goupille est insérée dans la tige de liaison (3).

3. Support selon la revendication 1, dans lequel la rainure de coulissement (6) est formée sur la tige de liaison (3), l'élément de positionnement (72) est agencé sur la tige de liaison (3).

4. Support selon la revendication 1, dans lequel l'élément élastique (73) est agencé entre l'élément de positionnement (72) et l'axe de pivot (5), l'élément élastique (73) est un ressort de traction.

5. Support selon la revendication 1, dans lequel la portion de positionnement (71) est agencée sur la tige principale (2), la portion de positionnement (71) inclut deux plaques latérales (713), l'axe de pivot (5) est inséré à travers les deux plaques latérales (713), une extrémité de la tige de liaison (3) est reçue entre les deux plaques latérales (713).

6. Support selon la revendication 5, dans lequel chacun de deux côtés de la tige de liaison (3) le long d'une direction longitudinale de l'axe de pivot (5) est une face en forme d'arc (31), le support présente en outre deux éléments de butée (8), l'axe de pivot (5) est inséré à travers les deux éléments de butée (8), chacun des éléments de butée (8) vient buter contre la tige de liaison (3) et une des plaques latérales (713), une extrémité de chacun des éléments de butée (8) venant buter contre la tige de liaison (3) présente une forme correspondant à la face en forme d'arc (31), une extrémité de chacun des éléments de butée (8) venant buter contre la plaque latérale (713) présente une surface plate.

7. Support selon la revendication 1, dans lequel la tige principale (2) est une tige en forme de V, chacune de deux extrémités de la tige principale (2) est disposée avec une dite tige de soutien (4).

8. Support selon la revendication 2, dans lequel la rainure de coulissement (6) est formée sur la tige de liaison (3), l'élément de positionnement (72) est agencé sur la tige de liaison (3); l'élément élastique (73) est agencé entre l'élément de positionnement (72) et l'axe de pivot (5), l'élément élastique (73) est un ressort de traction; la portion de positionnement (71) est agencée sur la tige principale (2), la portion de positionnement (71) inclut deux plaques latérales (713), l'axe de pivot (5) est inséré à travers les deux plaques latérales (713), une extrémité de la tige de liaison (3) est reçue entre les deux plaques latérales (713); chacun de deux côtés de la tige de liaison (3) le long d'une direction longitudinale de l'axe de pivot (5) est une face en forme d'arc (31), le support présente en outre deux éléments de butée (8), l'axe de pivot (5) est inséré à travers les deux éléments de butée (8), chacun des éléments de butée (8) vient buter contre la tige de liaison (3) et une des plaques latérales (713), une extrémité de chacun des éléments de butée (8) venant buter contre la tige de liaison (3) présente une forme correspondant à la face en forme d'arc (31), une extrémité de chacun des éléments de butée (8) venant buter contre la plaque latérale (713) présente une surface plate ; la tige principale (2) est une tige en forme de V, chacune de deux extrémités de la tige principale (2) est disposée avec une dite tige de soutien (4).
